# EUROPEAN PATENT APPLICATION

(11) **EP 1 385 257 A2**
(43) Date of publication of application: **28.01.2004**
(21) Application number: 03015355.5
(22) Date of filing: 08.07.2003
(51) Int. Cl.: H02K 15/02

(54) **Method of making a stator for an electric machine**

(30) Priority: 25.07.2002 GB 0217259
(71) Applicant: Dana Automotive Limited, Erdington, Birmingham B24 9QS (GB)
(72) Inventor: Johnson, Raymond Martin, Erdington, Birmingham, B24 0DJ (GB); Black, David Thomas, Great Barr, Birmingham, B44 8SD (GB)
(74) Representative: Lucking, David John

(57) **Abstract**

A method of making a motor stator (10) is disclosed in which the stator (10) includes an inner stator part (12) and an outer stator part (14), the method including placing the inner stator part (12) inside the outer stator part (14), and rotating the inner stator part (12) with respect to the outer stator part (14) such that the inner stator part (12) is retained with respect to the outer stator part (14) by means of an interference fit.

## Description

This invention relates to a method of making a stator for a motor, of the kind including a plurality of stacked laminations.

Stators are known, for example for brushless motors, which include a plurality of generally radially extending pole pieces upon which coils are wound. Conventionally such pole pieces extend radially inwardly from an outer stator ring and the coils are wound onto the pole pieces from the interior of the stator ring.

In US patent number 5134327 there is disclosed a stator which has an inner stator part, the stator pole pieces extend radially outwardly from an inner stator ring, so that the coils can be wound onto the pole pieces exteriorly. The stator includes an external stator part, also in the form of a ring, which is assembled and connected to the inner stator part upon relative sliding, the inner and outer stator parts being a push fit.

Whereas this arrangement provides advantages over the conventional arrangement described above, assembling the inner and outer stator parts as a push fit can be problematical.

According to a first aspect of the invention we provide a method of making a motor stator including an inner stator part and an outer stator part, the method including placing the inner stator part inside the outer stator part, and rotating the inner stator part with respect to the outer stator part such that the inner stator part is retained with respect to the outer stator part by means of an interference fit.

Thus by making the stator by the method of the invention, the difficulties of achieving a satisfactory push fit by simple relative sliding, as in US5134327 are overcome. Moreover, a clearance may be provided between the inner and outer stator parts prior to relatively rotating and so placing the inner stator part within the outer stator part may readily be achieved by relative sliding without there being any resistance to sliding. Because of this it is possible to form the inner and outer stator parts from laminations economically from a common area of metal sheet material.

Thus the method may include the steps of forming from metal sheet material a plurality of laminations, each lamination including a first lamination part and a second lamination part, either at least one of the first lamination parts being formed from material surrounding one of the second lamination parts or at least one of the second lamination parts being formed from material removed from the interior of one of the first lamination parts, stacking a plurality of first lamination parts to form the outer stator part, and stacking a plurality of second lamination parts to form the inner stator part.

Desirably the inner stator part includes an inner stator ring from which extend radially outwardly a plurality of stator pole pieces onto which coils are wound prior to placing the inner stator part in the outer stator part. The inner stator ring may simply be thin walled so as to provide a substantial resistance to transmission of magnetic flux from one pole to the next, but alternatively or additionally, the inner stator ring wall may be provided with thinned regions between the poles to provide localised high magnetic resistance locations. In another example, the pole pieces are provided by separate components, and are assembled to provide an inner stator part with an inner ring wall by non-metallic material such as an insulating resin.

In each case, the inner stator ring primarily provides support for the pole pieces whilst the coils are wound onto the pole pieces, the mechanical strength of the inner stator part being maximised upon placing the inner stator part within the outer stator part.

To permit the inner stator part to be placed within the outer stator part, the outer stator part may include a plurality of axially extending recesses, one for each pole piece of the inner stator part, end surfaces of the pole pieces upon relative rotation of the inner and outer stator parts, engaging with areas of an inner wall of the outer stator part as an interference fit. If desired, the end surfaces of the pole pieces and/or the areas of the inner wall with which they engage, may be shaped so that as the inner and outer stator parts are relatively rotated upon assembly, the interference between the end surfaces and the areas of the inner wall of the outer stator part increases. If desired, the end surfaces of the pole pieces and/or the areas of the inner wall with which they engage, may instead or additionally each include a protuberance which enhances the interference fit between the pole piece end surfaces and the inner wall areas.

According to a second aspect of the invention we provide a method of making a motor stator including a plurality of laminations, the method including the steps of forming from metal sheet material a plurality of laminations, each lamination including a first lamination part and a second lamination part, either at least one of the first lamination parts being formed from material surrounding one of the second lamination parts or at least one of the second lamination parts being formed from material removed from the interior of one of the first lamination parts, stacking a plurality of first lamination parts to form an outer stator part, stacking a plurality of second lamination parts to form an inner stator part, and assembling the inner and outer stator parts to form the stator.

According to a third aspect of the invention we provide a method of making a motor stator including a plurality of laminations, the method including the steps of forming from metal sheet material a plurality of laminations, each lamination including a first lamination part and a second lamination part, either at least one of the first lamination parts being formed from material surrounding one of the second lamination parts or at least one of the second lamination parts being formed from material removed from the interior of one of the first lamination parts, stacking a plurality of first lamination parts to form an outer stator part, stacking a plurality of second lamination parts to form an inner stator part, placing the inner stator part inside the outer stator part, and rotating the inner stator part with respect to the outer stator part such that the inner stator part is retained with respect to the outer stator part by means of an interference fit.

According to a fourth aspect of the invention we provide a motor including a stator made by a method according to any one of the preceding claims.

Embodiments of the invention will now be described with the aid of the accompanying drawings in which:-
FIGURE 1 is an end view of a stator made by a method in accordance with the present invention, during assembly of inner and outer stator parts;
FIGURE 2 is an end view of the stator of figure 1 with the inner and outer stator parts more fully assembled;
FIGURE 3 is an enlarged view of part of the stator of figures 1 and 2;
FIGURE 4 is an illustrative view showing how laminations of the stator or figures 1 and 2 are formed.
FIGURE 5 is a view similar to figure 3, of an alternative embodiment.

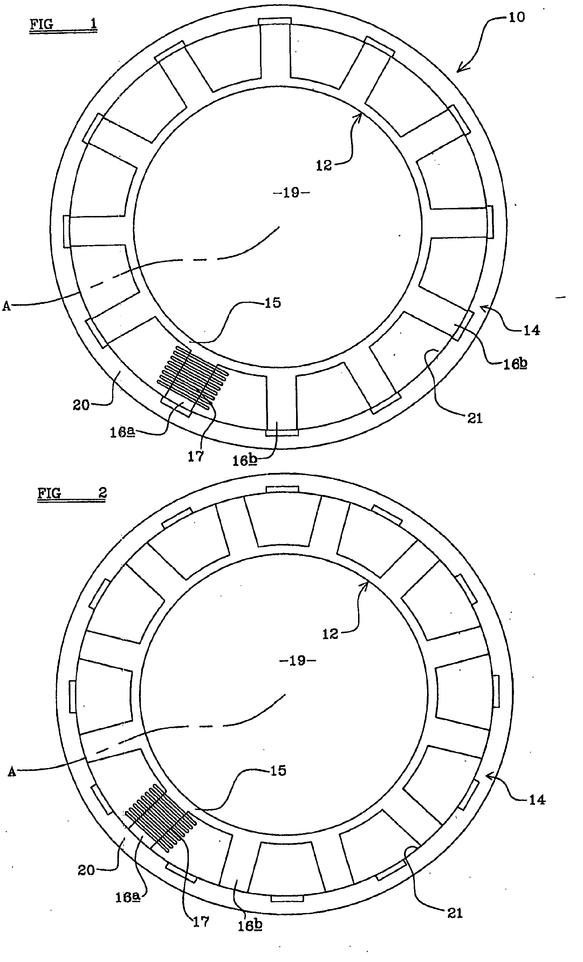

Referring to figures 1 and 2 there is shown a stator 10 which includes an inner stator part 12 and an outer stator part 14. The inner stator part 12 includes an inner stator ring 15 which is generally cylindrical, and from which extend radially outwardly a plurality of axially extending stator pole pieces 16a, 16b etc. Each pole piece 16a, 16b etc. has in use, a coil of wire wound onto the pole piece although in the drawings for clarity, a single coil 17 is shown, wound about pole piece 16a.

In use the coils 17 are energised so that a rotor (not shown) of the motor is caused to rotate within the stator 10, in the inner space indicated at 19. The invention is particularly but not exclusively applicable where the stator 10 is for a brushless motor such as a DC brushless motor.

The inner stator ring 15 is thin walled so as to provide a substantial resistance to the transmission of magnetic flux generated at one pole, to the next pole. If necessary the inner ring 15 wall may include thinned regions between the poles, to provide local high magnetic resistance locations.

Because the pole pieces 16a, 16b etc. extend radially outwardly, the coils 17 may be wound onto the pole pieces 16a, 16b etc. from exteriorly of the inner stator part 12, prior to assembly with the outer stator part 14.

The outer stator part 14 is generally ring shaped in this example, and includes an outer stator ring 20 with a generally cylindrical inner wall 21. However the inner wall 21 includes a plurality of axially extending recesses or grooves 22a, 22b etc., there being a groove 22a, 22b etc. for each inner stator part pole piece 16a, 16b etc. Moreover the grooves 22a, 22b etc. and the pole pieces 16a, 16b etc. are generally evenly spaced around the stator axis A so that each pole piece 16a, 16b etc. may be aligned with a respective groove 22a, 22b etc. as shown in figure 1.

It can be seen that in this condition there is a clearance between the inner 12 and outer 14 stator parts so that the inner stator part 12, complete with coils 17 wound onto the pole pieces 16a, 16b etc. may be placed within the outer stator part 14 by relative axial sliding, without any frictional resistance or the like.

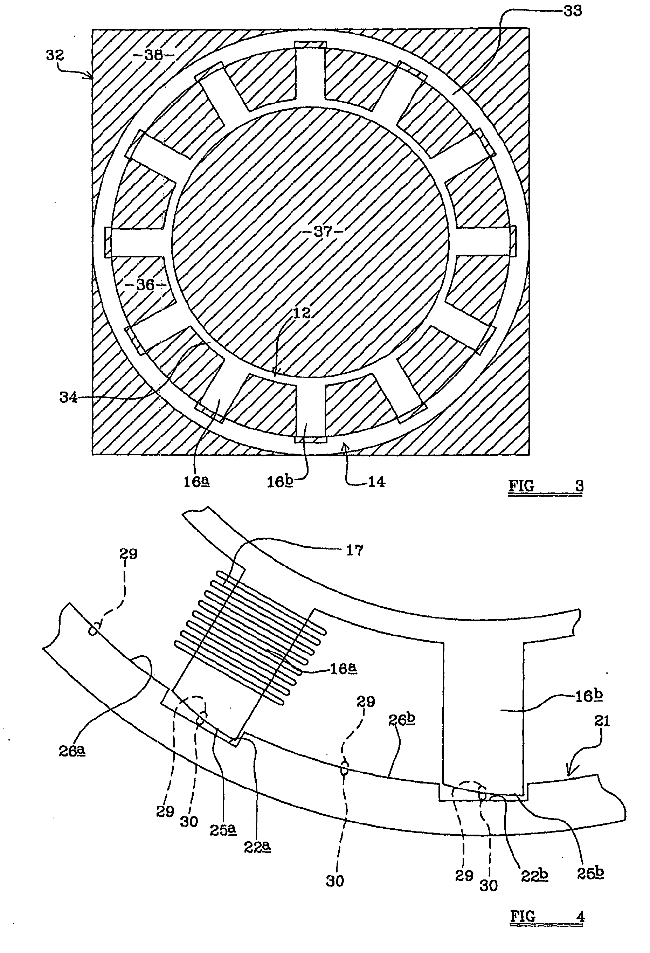

Referring particularly to figure 3, when the inner and outer stator parts 12, 14 are in their correct relative axial positions, the inner stator part 12 may be rotated relative to the outer stator part 14 so that end surfaces 25a, 25b etc. of the pole pieces 16a, 16b etc. move out of their respective grooves 22a, 22b etc., and engage adjacent areas 26a, 26b etc. of the inner wall 21 of the outer stator part 14.

It can be seen from figure 3 that the end surfaces 25a, 25b etc. of the pole pieces 16a, 16b etc. are shaped so that as the stator parts 12, 14 are relatively rotated (the inner stator part 12 being rotated clockwise relative to the outer stator part 14 in this example) an increasingly tight interference fit between the end surfaces 25a, 25b etc. and the areas 26a, 26b of the inner wall 21 is achieved. Thus upon sufficient relative rotation, a substantially tight fit between the inner and outer stator parts 12, 14 is achieved.

If desired, as indicated in figure 3 in dotted lines, one of, or each of the end surfaces 25a, 25b etc. and the areas 26a, 26b etc. with which they engage, may be provided with a protuberance 29 which may simply increase the effectiveness of the interference fit between the end surfaces 25a, 25b etc. and the areas 26a, 26b etc. with which they engage, or the protuberance on one only of the end surfaces 25a, 25b etc. and the areas 26a, 26b, may be received in a respective detent 30, to provide a yet more positive interference fit.

Preferably each of the stator parts 12, 14 are made from a plurality of lamination parts, stacked together with insulating bonding material such as a resin, therebetween.

By virtue of the relative rotation between the inner and outer stator parts 12, 14 required to achieve an interference fit between the stator parts 12, 14, and the clearance desirable between them prior to relative rotation to achieve the interference fit, the lamination parts may readily and most economically be made.

Referring to figure 4, an area of a thin metal sheet 32 is shown which has a thickness equivalent to the thickness of a single lamination for the stator 10. The metal sheet is typically a suitable grade of steel but another suitable metal sheet 32 may be provided.

Each stator lamination includes a first lamination part 33 for the outer stator part 14, and a second lamination part 34 for the inner stator part 12. In one example a first lamination part 33 is formed from the area of the metal sheet 32, and then subsequently, a second lamination part 34 is formed from material removed from the interior of the first lamination part 33. Thus only a relatively small amount of the area of the metal sheet between the first 33 and second 34 lamination parts indicated at 36 in figure 4, will be wasted.

In an alternative method, a second lamination part 34 is formed from the metal sheet 32 and then subsequently a first lamination part 33 is formed from the material surrounding the removed second lamination part 34. Again, only small area 36 of the metal sheet 32 between the first 33 and second 34 lamination parts will be wasted.

Although the metal sheet material 38 surrounding the removed first and second lamination parts 33, 34, and an area 37 internal of the second lamination part 34 will also be wasted, in each case there will be far less waste than with an arrangement in which the inner and outer stator parts 12, 14 achieve an interference fit upon relative sliding only, as each of the lamination parts 33, 34 would need to provided from individual areas of the metal sheet 32.

Practically, when forming the lamination parts 33, 34, these may be formed simultaneously from the metal sheet 32 using suitable tooling, and indeed a plurality of laminations may be formed simultaneously be stacking metal sheets 32.

A plurality of the first lamination parts 33 may be stacked to provide the outer stator part 14, and a corresponding plurality of the second lamination parts 34 may be stacked to provide the inner stator part 12, but of course the first stator part 33 need not be in the same position in the outer stator part 14 stack as the second stator part 34 formed from the same area of the metal sheet in the inner stator part 12 stack.

Various modifications may be made without departing from the scope of the invention. For example, the inner and outer stator parts 12, 14 need not have the number of pole pieces 16a, 16b etc. and grooves 22a, 22b etc. respectively indented, but any desired number of poles for the stator 10 may be provided.

Whereas it is preferred for the end surfaces 25a, 25b etc. to be shaped as described, these may be of a simple cylindrical shape corresponding generally to the shape of the inner wall 21 of the outer stator part 14.

In another example the outer stator part 14 at least need not have a generally cylindrical outer configuration as indicated in the drawings, but an outer stator part 14 with any desired outer configuration may be provided.

The stator 10 may be of any desired axial extent, and a motor having a stator 10 made by the method of the invention my be used for any desired application, and may be of other than the DC brushless kind.

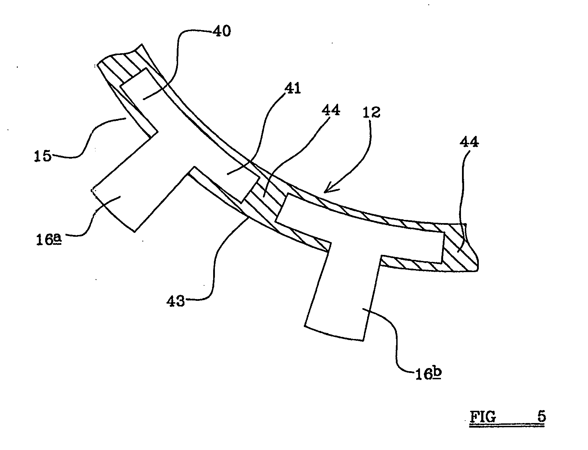

In another example shown in figure 5, instead of the inner stator ring 15 being formed in metal integrally with the pole pieces 16a, 16b etc. the pole pieces 16a, 16b etc. may be formed as separate components. These may or may not include a foot formation 40 or formations 40, 41 to facilitate assembling the separate pole pieces 16a, 16b etc. in non-metallic material, 43 such as an insulating resin, to provide an inner stator part 12. In such an arrangement, the poles of the stator 10 are insulated from each other by insulating parts 44 of the resin 43 or other non-metallic material between the pole pieces 16a, 16b etc. The individual pole piece components may be made from the area 33 of the metal sheet 32 as described above with reference to figure 4.

## Claims

**1.** A method of making a motor stator (10) including an inner stator part (12) and an outer stator part (14), the method including placing the inner stator part (12) inside the outer stator part (14), and rotating the inner stator part (12) with respect to the outer stator part (14) such that the inner stator part (12) is retained with respect to the outer stator part (14) by means of an interference fit.

**3.** A method according to claim 1 **characterised in that** the inner and outer stator parts (12,14) are formed from laminations.

**3.** A method according to claim 2 **characterised in that** the method includes the steps of forming from metal sheet material a plurality of laminations, each lamination including a first lamination part (33) and a second lamination part (34), either at least one of the first lamination parts (33) being formed from material surrounding one of the second lamination parts (34) or at least one of the second lamination parts (34) being formed from material removed from the interior of one of the first lamination parts (33), stacking a plurality of first lamination parts (33) to form the outer stator part (14), and stacking a plurality of second lamination parts (34) to form the inner stator part (12).

**4.** A method according to any one of the preceding claims **characterised in that** the inner stator part (12) includes an inner stator ring (15) from which extend radially outwardly a plurality of stator pole pieces (16a; 16b), the method including winding onto the pole pieces (16a;16b) coils (17) prior to placing the inner stator part 12) in the outer stator part (14).

**5.** A method according to claim 4 **characterised in that** the inner stator ring (15) is thin walled so as to provide a substantial resistance to transmission of magnetic flux from one pole (16a;16b) to the next.

**6.** A method according to claim 4 **characterised in that** the pole pieces (16a,16b) are provided by separate components, and are assembled to provide an inner stator part (12) with an inner ring wall (44) of non-metallic material.

**7.** A method according to claim 4 **characterised in that** a clearance is provided between the inner and outer stator parts (12,14) prior to relatively rotating, and the outer stator part (14) includes a plurality of axially extending grooves (22a;22b), one for each pole piece (16a;16b) of the inner stator part (12), end surfaces (25a;25b) of the pole pieces (16a;16b) upon relative rotation of the inner and outer stator parts (12,14), engaging with areas (26a;26b) of an inner wall (21) of the outer stator part (14) adjacent their respective grooves (22a;22b) as an interference fit.

**8.** A method according to claim 7 **characterised in that** the end surfaces (25a;25b) of the pole pieces (16a;16b) and/or the areas (26a;26b) of the inner wall (21) with which they engage, are shaped so that as the inner and outer stator parts (12,14) are relatively rotated upon assembly, the interference between the end surfaces (25a;25b) and the areas (26a;26b) of the inner wall (21) of the outer stator part (14) increases.

**9.** A method according to claim 9 or claim 10 **characterised in that** the end surfaces (26a;26b) of the pole pieces (16a;16b) and/or the areas (26a;26b) of the inner wall (21) with which they engage include a protuberance (29) which enhances the interference fit between the pole piece end surfaces (25a;25b) and the inner wall (21) areas (26a;26b).

**10.** A method of making a motor stator (10) including a plurality of laminations, the method including the steps of forming from metal sheet material (32) a plurality of laminations, each lamination including a first lamination part (33) and a second lamination part (34), either at least one of the first lamination parts (33) being formed from material surrounding one of the second lamination parts (34) or at least one of the second lamination parts (34) being formed from material removed from the interior of one of the first lamination parts (33), stacking a plurality of first lamination parts (33) to form an outer stator part (14), stacking a plurality of second lamination parts (34) to form an inner stator part (12), and assembling the inner and outer stator parts (12,14) to form the stator (10).

**11.** A method of making a motor stator (10) including a plurality of laminations, the method including the steps of forming from metal sheet material (32) a plurality of laminations, each lamination including a first lamination part (33) and a second lamination part (34), either at least one of the first lamination parts (33) being formed from material surrounding one of the second lamination parts (34) or at least one of the second lamination parts (34) being formed from material removed from the interior of one of the first lamination parts (33), stacking a plurality of first lamination parts (33) to form an outer stator part (14), stacking a plurality of second lamination parts (34) to form an inner stator part (12), placing the inner stator part (12) inside the outer stator part (14), and rotating the inner stator part (12) with respect to the outer stator part (14) such that the inner stator part (12) is retained with respect to the outer stator part (14) by means of an interference fit.

**12.** A motor including a stator (10) made by a method according to any one of the preceding claims.
